# EUROPÄISCHE PATENTSCHRIFT

(11) **EP 0 447 596 B1**
(45) Veröffentlichungstag und Bekanntmachung des Hinweises auf die Patenterteilung: **08.06.1994**
(21) Anmeldenummer: 90105565.7
(22) Anmeldetag: 23.03.1990
(51) Int. Cl.: G01K 1/10

(54) **Temperaturfühler**
Temperature detector
Capteur de température

(43) Veröffentlichungstag der Anmeldung: 25.09.1991
(73) Patentinhaber: SIEMENS AKTIENGESELLSCHAFT, 80333 München (DE)
(72) Erfinder: Wildgen, Andreas, Dr.-Ing., D-8419 Nittendorf/Haugenried (DE); Binnewies, Ludwig, Dipl.-Phys., D-8417 Lappersdorf (DE)

(56) Entgegenhaltungen:
- EP-A- 0 063 645
- WO-A-87/05146
- DE-A- 3 117 827
- US-A- 3 891 467
- NASA TECH BRIEFS. no. 4H, April 1985, WASHINGTON US RICHTER: "OXIDATION PROTECTION FOR THERMOCOUPLES"

## Beschreibung

Die Erfindung betrifft einen Temperaturfühler nach dem Oberbegriff von Patentanspruch 1.

Solche Temperaturfühler enthalten z.B. einen Platin-Dünn- oder Dickschichtwiderstand als genaues und beständiges Temperatur-Meßelement. Sie können unter anderem in Geräten zum Messen der Masse eines strömenden gasförmigen Mediums verwendet werden, z.B. als Luftmassenmesser für den Ansaugtrakt eines Kraftfahrzeugmotors.

Das Platin des Dünnschichtwiderstands ist zwar chemisch so beständig und so haftfest auf einem Substrat aufgebracht, daß es auch mit ungeschützter Oberfläche als Meßelement verwendet werden könnte. Es ist aber in weichgeglühtem Zustand sehr empfindlich gegen mechanische Beschädigungen. Eine solche Beschädigung kann leicht den Widerstandswert des Dünnschichtwiderstandes verändern und so zu Meßfehlern führen. Deshalb ist es bekannt, den Dünnschichtwiderstand mit einer glaskeramischen Isolierschicht abzudecken (Sonderdruck aus Konferenzberichte "Sensor 82", Degussa-Meßtechnik Nr. 8202).

Wird der Temperaturfühler in einer feuchten Umgebung eingesetzt, so kann das Zusammentreffen von elektrischer Spannung in der Widerstandsschicht und von Feuchtigkeit aus der Umgebung in der Glasdeckschicht zu Lochfraß und Rissen führen, die eine Zerstörung des Meßfühlers zur Folge haben können. Insbesondere trifft das bei Sensorelementen für Luftmassenmesser auf Glasbasis für die Kraftfahrzeugtechnik zu, bei denen die verwendeten Materialien unterschiedliche Forderungen gleichzeitig erfüllen müssen, wie z.B. ein niedriger, in einem engen Bereich liegender Schmelzpunkt, möglichst gleiche Ausdehnungskoeffizienten für die verschiedenen Schichten, hohe, knapp unter dem Glasschmelzpunkt liegende Betriebstemperatur, kleiner Emissionskoeffizient im Bereich der Wärmestrahlung usw.

Der Erfindung liegt die Aufgabe zugrunde, einen Temperaturfühler zu schaffen, der gegen eine elektrochemische Schädigung der glasartigen oder glaskeramischen Deckschicht unempfindlich ist.

Diese Aufgabe wird erfindungsgemäß durch einen Temperaturfühler mit den Merkmalen von Patentanspruch 1 gelöst. Grundgedanke der Erfindung ist es, die genannte Deckschicht zusätzlich mit einer Schutzschicht aus einem reaktionsträgen, edlen Metall abzudecken, z.B. mit einer Schutzschicht aus Platin.

Ein besonderer Vorteil ist dabei, daß die Wärmestrahlung des als ein niederohmiger Heißfilmwiderstand ausgebildeten Meßelements stark herabgesetzt wird, was bei Ansaugluft-Massenmessern zu einer erheblichen Verringerung des Meßfehlers insbesondere im Leerlaufbereich führt.

Die Erfindung wird im folgenden anhand der Zeichnung erläutert. Es zeigen:
- Figur 1: einen erfindungsgemäßen Temperaturfühler in einer teilweise aufgeschnittenen perspektivischen Ansicht, und
- Figur 2: den Temperaturfühler nach Figur 1 in einem Querschnitt in größerem Maßstab.

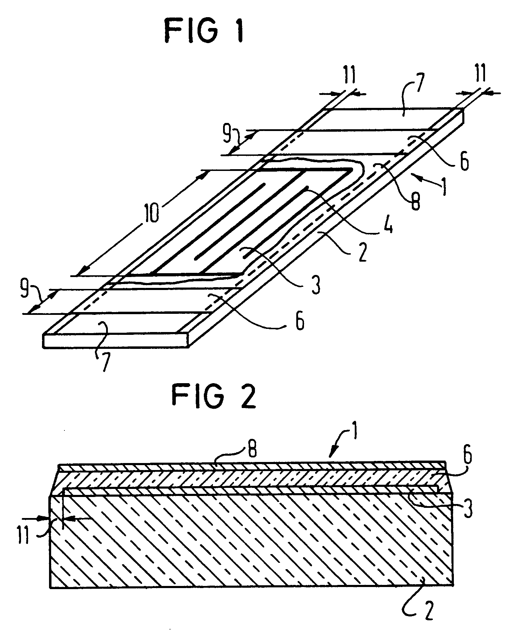

Ein Temperaturfühler 1 enthält ein Substrat 2 aus Glas oder Glaskeramik, auf das ein schichtförmiger Meßwiderstand 3, z.B. aus Platin, aufgebracht ist (Fig. 1). Das Substrat 2 ist etwa 180 »m dick, der Meßwiderstand 3 etwa 1 »m. Um ihn herzustellen, wird Platin durch Sputtern, d.h. durch Kathodenzerstäuben, aufgebracht und danach mit einem Laserschneidgerät entlang von Schnittlinien 4 durchgetrennt, so daß sich ein mäanderförmiger Verlauf des schichtförmigen Meßwiderstandes 3 ergibt. Auf den Meßwiderstand 3 wird eine Deckschicht 6 aus Glas oder Glaskeramik aufgebracht, und zwar zweckmäßigerweise im Siebdruckverfahren. Die Deckschicht 6 ist etwa 10 »m dick und sie deckt den Meßwiderstand 3 nicht vollständig ab, sondern läßt an beiden Enden jeweils einen Anschlußbereich 7 frei, an dem der Meßwiderstand 3 angelötet wird.

Auf die Deckschicht 6 wird zusätzlich eine Schutzschicht 8 aus Platin - oder aus einem anderen Edelmetall -aufgesputtert oder aufgedampft. Die Schutzschicht 8 ist etwa 100 nm dick, sie darf keinen Kontakt zu den Anschlußbereichen 7 haben. Beidseitig muß deshalb ein Abstand 9 von etwa 0,5 bis 1 mm frei bleiben.

Der Meßwiderstand 3 weist eine aktive Fühlerfläche mit der Länge 10 auf, die Schutzschicht 8 muß sich auf beiden Seiten mindestens um 0,5 mm über die Länge 10 hinaus erstrecken, die aktive Fühlerfläche muß "überdeckt" werden. Entlang der seitlichen Ränder des Temperaturfühlers 1 muß das Substrat 2 auf einer Seite 11 von mindestens 30 »m von dem Meßwiderstand 3 frei bleiben, d.h. dieser darf nicht bis zu den Rändern reichen. Das Substrat 2 ist hier direkt von der Deckschicht 6 abgedeckt (vgl. auch Fig. 2).

Die metallische Schutzschicht 8 bewirkt, daß die über der aktiven Fläche (Länge 10) liegende Deckschicht 6 nicht mehr mit Wasser oder aggressiver Luft in Berührung kommt und somit der Temperaturfühler 1 unter deren Einwirkung nicht mehr zerstört werden kann.

Die Schutzschicht 8 wirkt außerdem als Verspiegelung des schichtförmigen Widerstandes 3 und verringert die von diesem abgegebene Wärmestrahlung ganz erheblich. Ein Luftmassen-Meßgerät enthält nämlich im wesentlichen zwei als Chips auf Glasgrundlage ausgebildete Temperaturfühler 1, von denen einer einen Widerstandswert von 1000 Ohm aufweist und als Temperaturfühler dient und der andere 9 Ohm aufweist und als Heizelement dient. Im Prinzip ist er ebenfalls ein Temperaturfühler, der mit überhöhtem Strom betrieben wird. Die abgegebene Wärme ist ein Maß für den den Temperaturfühler überstreichenden Luftmassenstrom. Da dieser im Leerlauf des Motors gering ist, ist auch die an ihn abgeführte Wärmemenge gering, der Anteil der durch Strahlung abgegebenen Wärmemenge ist hier viel größer und wirkt sich als Meßungenauigkeit aus. Dadurch, daß die Schutzschicht 8 die Wärmeabstrahlung verringert, verbessert sie die Meßgenauigkeit des Temperaturfühlers, insbesondere im Leerlaufbereich, erheblich. In einem Ausführungsbeispiel wurde der Meßfehler im Leerlauf auf die Hälfte verringert.

Der Meßwiderstand 3 kann außer wie bereits erwähnt aus Platin auch aus Molybdän, Nickel oder ähnlichen Metallen hergestellt werden. Die Deckschicht 6 kann, wie erwähnt, aus Glas, aber auch aus Keramik, Kunststoff oder sonstigen geeigneten Werkstoffen bestehen. Die Schutzschicht 8 schließlich kann außer aus Platin auch aus Chrom oder ähnlichen reaktionsträgen Metallen hergestellt werden.

## Patentansprüche

1. Temperaturfühler mit einem auf einem Substrat (2) als Schicht aufgebrachten temperaturabhängigen Meßwiderstand (3), der durch eine Deckschicht (6) gegen Umgebungseinflüsse geschützt ist,
**dadurch gekennzeichnet,**
daß die Deckschicht (6) mit einer Schutzschicht (8) aus einem reaktionsträgen Metall abgedeckt ist.

2. Temperaturfühler nach Anspruch 1,
**dadurch gekennzeichnet,**
daß die Schutzschicht (8) aus Platin besteht.

3. Temperaturfühler nach Anspruch 1,
**dadurch gekennzeichnet,**
daß die Schutzschicht (8) im Abstand vor seitlichen Anschlußbereichen (7) des Meßwiderstands (3) endet.

4. Temperaturfühler nach Anspruch 1,
**dadurch gekennzeichnet,**
daß die Schutzschicht (8) durch Kathodenzerstäubung oder Aufdampfen aufgebracht wird.

5. Temperaturfühler nach Anspruch 1,
**dadurch gekennzeichnet,**
daß die Schutzschicht (8) aus Chrom besteht.

6. Temperaturfühler nach Anspruch 1,
**dadurch gekennzeichnet,**
daß der Meßwiderstand (3) aus Platin, Nickel oder Molybdän besteht.

7. Temperaturfühler nach Anspruch 1,
**dadurch gekennzeichnet,**
daß die Deckschicht (6) aus Glas, Keramik oder einem hitzebeständigen Kunststoff besteht.

## Claims

1. Temperature sensor having a temperature-dependent measurement resistor (3) which is applied on a substrate (2) as a film and is protected against environmental influences by means of a covering film (6), characterized in that the covering film (6) is covered by a protective film (8) composed of a weakly reactive metal.

2. Temperature sensor according to Claim 1, characterized in that the protective film (8) is composed of platinum.

3. Temperature sensor according to Claim 1, characterized in that the protective film (8) ends at a distance in front of side connecting regions (7) of the measurement resistor (3).

4. Temperature sensor according to Claim 1, characterized in that the protective film (8) is applied by cathode sputtering or vapour deposition.

5. Temperature sensor according to Claim 1, characterized in that the protective film (8) is composed of chromium.

6. Temperature sensor according to Claim 1, characterized in that the measurement resistor (3) is composed of platinum, nickel or molybdenum.

7. Temperature sensor according to Claim 1, characterized in that the covering film (6) is composed of glass, ceramic or a heat-resistant plastic.

## Revendications

1. Capteur de température comportant une résistance de mesure (3), qui dépend de la température, qui est disposée sous la forme d'une couche sur un substrat (2) et qui est protégée par une couche de finition (6) des influences de l'environnement, caractérisé par le fait que la couche de finition (6) est recouverte d'une couche de protection (8) en un métal inerte.

2. Capteur de température suivant la revendication 1, caractérisé par le fait que la couche de protection (8) est en platine.

3. Capteur de température suivant la revendication 1, caractérisé par le fait que la couche de protection (8) se termine à distance de zones latérales de raccordement (7) de la résistance de mesure (3).

4. Capteur de température suivant la revendication 1, caractérisé par le fait que la couche de protection (8) est déposée par pulvérisation cathodique ou en phase vapeur.

5. Capteur de température suivant la revendication 1, caractérisé par le fait que la couche de protection (8) est en chrome.

6. Capteur de température suivant la revendication 1, caractérisé par le fait que la résistance de mesure (3) est en platine, en nickel ou en molybdène.

7. Capteur de température suivant la revendication 1, caractérisé par le fait que la couche de finition (6) est en verre, en céramique ou en une matière plastique résistante à la chaleur.
